# EUROPÄISCHE PATENTSCHRIFT

(11) **EP 2 116 402 B1**
(45) Veröffentlichungstag und Bekanntmachung des Hinweises auf die Patenterteilung: **18.09.2013**
(21) Anmeldenummer: 09159517.3
(22) Anmeldetag: 06.05.2009
(51) Int. Cl.: B60G 11/28, B62D 61/12

(54) **Luftfederungssystem für ein Nutzfahrzeug und Nutzfahrzeug mit einem derartigen Luftfederungssystem**
Air suspension system for a commercial vehicle and commercial vehicle with such an air suspension system
Système de ressort pneumatique pour un véhicule utilitaire et véhicule utilitaire doté d'un tel système de ressort pneumatique

(30) Priorität: 06.05.2008 DE 202008006185 U
(43) Veröffentlichungstag der Anmeldung: 11.11.2009
(73) Patentinhaber: Kögel Trailer GmbH & Co. KG, 89349 Burtenbach (DE)
(72) Erfinder: Schmutz-Eggert, Gerhard, 89278 Nersingen (DE); Falk, Robert, 89257 Illertissen (DE); Rodinger, Herbert, 89278 Nersingen (DE); Coulibaly, Jean-Baptiste, 53129 Bonn (DE)
(74) Vertreter: Meissner, Bolte & Partner

(56) Entgegenhaltungen:
- EP-A- 0 554 573
- EP-A- 0 742 113
- DE-A1- 10 206 017
- DE-U1- 29 608 062
- DE-U1-202008 014 426
- US-B1- 6 840 525

## Beschreibung

Die Erfindung bezieht sich auf ein Luftfederungssystem für ein Nutzfahrzeug mit den Merkmalen des Oberbegriffs des Anspruchs 1. Ein derartiges Luftfederungssystem ist beispielsweise aus EP 0 742 113 A2 bekannt.

Die Luftfederung eines Nutzfahrzeugs, insbesondere eines Nutzfahrzeuganhängers umfasst eine Schwinge, die an einer mit dem Fahrzeugrahmen fest verbundenen Stütze schwenkbar verbunden ist. Die Schwinge dient zur Befestigung einer Radachse und ist mit einem Stoßdämpfer und einem Luftfederbalg gekoppelt. Die Oberseite des Luftfederbalgs ist mit dem Fahrzeugrahmen und die Unterseite mit der Schwinge fest verbunden.

Bahnverladbare Nutzfahrzeuge werden mittels einer Kranzange zur Verladung gefasst und angehoben. Dabei besteht das Problem, dass der standardmäßig montierte Luftfederbalg durch das Gewicht der entlasteten Achse überstreckt und bedingt durch die damit einhergehende Verformung seine alte Ausgangslage nicht mehr einnimmt.

Im Hinblick auf dieses Problem ist es bereits bekannt, die Balganbindung an einer Stelle zu unterbrechen. Bei der Verladung des Fahrzeuges und der damit verbundenen Anhebung wird die Schwinge vom Rahmen gelöst, wobei der Luftfederbalg entweder an der Schwinge oder am Rahmen verbleibt. Dadurch wird eine Überdehnung des Balgs vermieden. Eine konstruktive Lösung hierfür ist beispielsweise in EP 0 554 573 A2 beschrieben, die einen Luftfederbalg offenbart, dessen Tauchkolben an seiner Unterseite offen ist. Der unten offene Tauchkolben wirkt mit einem in den Tauchkolben passenden Topf zusammen, der mit der Schwinge fest verbunden ist. Bei der Verladung löst sich der Tauchkolben vom Topf und kommt somit von der Schwinge frei, die sich nach unten bewegt. Um die Fahrstellung einzunehmen, wird die Schwinge nach oben bewegt, wobei der nach unten offene Tauchkolben und der an der Schwinge befestigte Topf wieder in Eingriff kommen. Hierzu ist der Topf als Zentrierkegel ausgebildet, wodurch gewisse Lageabweichungen zwischen dem Tauchkolben und dem Topf ausgeglichen werden können.

Die Zentrierfunktion der aus der EP 0 554 573 A2 bekannten Anordnung ist allerdings auf relativ kleine Lageabweichungen beschränkt. Deshalb ist in der eingangs genannten EP 0 742 113 A2 eine Luftfederung für Nutzfahrzeuge beschrieben, bei der das freie Ende des Luftfederbalgs durch eine Blattfeder geführt ist, die die Lage des Luftfederbalgs bestimmt. Die Blattfeder ist dazu mit dem freien Ende des Luftfederbalgs einerseits und andererseits mit einem bezogen auf das freie Ende des Luftfederbalgs ortsfesten Teil des Rahmens bzw. der Schwinge verbunden. Die Blattfeder erstreckt sich dabei zumindest abschnittsweise und in einem bestimmten Abstand parallel zur Schwinge und benötigt daher entsprechenden Bauraum.

Der Erfindung liegt die Aufgabe zugrunde, ein Luftfederungssystem der eingangs genannten Art derart zu verbessern, dass eine sichere und einfache Verbindung zwischen der Schwinge und dem Fahrzeugrahmen hergestellt werden kann, wenn die Schwinge aus der Lösestellung in die Fahrstellung bewegt wird. Ferner liegt der Erfindung die Aufgabe zugrunde, ein Nutzfahrzeug mit einem derartigen Luftfederungssystem anzugeben.

Erfindungsgemäß wird diese Aufgabe durch ein Luftfederungssystem mit den Merkmalen des Anspruchs 1 gelöst. Im Hinblick auf das Nutzfahrzeug wird die Aufgabe durch den Gegenstand des Anspruchs 8 gelöst.

Die Erfindung beruht auf dem Gedanken, ein Luftfederungssystem für ein Nutzfahrzeug anzugeben, das eine schwenkbar gelagerte Schwinge zur Befestigung einer Radachse und einen Luftfederbalg zur lösbaren Verbindung der Schwinge mit einem Fahrzeugrahmen aufweist. Dabei ist die Schwinge in eine Lösestellung nach unten und in eine Fahrstellung nach oben schwenkbar. Am Luftfederbalg, insbesondere an einem axialen Ende des Luftfederbalgs ist eine erste Platte senkrecht zur Längsachse des Luftfederbalgs angeordnet. Die Platte steht bereichsweise über den Außenumfang des Luftfederbalgs vor, wobei ein Zentriermittel im vorstehenden Bereich der Platte angeordnet ist. Das Zentriermittel ist mit einem bezogen auf die Schwinge oder den Rahmen ortsfesten Gegenstück zumindest in der Fahrstellung der Schwinge im Eingriff.

Durch das an der Platte außermittig angeordnete Zentriermittel wird auf einfache Weise eine sichere Verbindung des Luftbalgs mit der Schwinge beziehungsweise mit dem Rahmen erreicht, ohne dass dafür die in der EP 0 742 113 A2 verwendete Blattfeder erforderlich ist. Dadurch wird eine im Vergleich kompakte Bauweise des Luftfederungssystems erreicht. Überdies ist die Platte mit dem exzentrisch angeordneten Zentriermittel sehr einfach nachrüstbar.

Bei einem bevorzugten Ausführungsbeispiel umfasst das Zentriermittel ein dreieckförmiges Blech, das auf der dem Gegenstück zugewandten Seite der ersten Platte im Wesentlichen parallel zur Längsachse des Luftfederbalgs angeordnet ist. Die Ausbildung des Zentriermittels als dreieckförmiges Blech hat sich als besonders zweckmäßig erwiesen sowohl im Hinblick auf eine einfache Herstellung, als auch auf eine sichere Zentrierungsfunktion. Das Gegenstück kann eine zweite Platte umfassen, in der eine Zentrieröffnung mit einer rautenförmigen Kontur ausgebildet ist. Die rautenförmige Kontur der Zentrieröffnung eignet sich besonders gut im Zusammenwirken mit dem als dreieckförmiges Blech ausgebildeten Zentriermittel, da dadurch eine sichere Einfädelung des Blechs in der Zentrieröffnung erreicht wird.

Das Gegenstück, insbesondere die zweite Platte kann mit einer Auflagefläche der Schwinge für den Luftfederbalg verbunden sein. Bei diesem Ausführungsbeispiel findet die Trennung zwischen dem Luftfederbalg und der Schwinge statt, wobei der Luftfederbalg rahmenfest angeordnet ist. Dieses Ausführungsbeispiel ist besonders montagefreundlich.

Dabei kann die zweite Platte bereichsweise über den Außenumfang der Auflagefläche vorstehen, wobei die Zentrieröffnung im vorstehenden Bereich der zweiten Platte angeordnet ist. Die zweite Platte ist somit analog zur ersten Platte aufgebaut und trägt somit auch zur kompakten Bauweise bei. Überdies ist die zweite Platte ebenfalls leicht nachrüstbar.

Vorzugsweise ist die erste Platte und/oder das Gegenstück, insbesondere die zweite Platte mit wenigstens einem Bolzen verbunden, der im Fahrzustand der Schwinge in eine entsprechende Bohrung in der ersten Platte und/oder dem Gegenstück, insbesondere der zweiten Platte eingreift. Das bedeutet, dass der bzw. mehrere Bolzen sind mit der ersten Platte verbunden und im Gegenstück bzw. in der zweiten Platte die entsprechenden Bohrungen vorgesehen sind. Es ist auch möglich, dass der bzw. die Bolzen mit dem Gegenstück bzw. der zweiten Platte verbunden sind und die Bohrungen in der ersten Platte ausgebildet sind. Durch die Bolzen wird eine zusätzliche Sicherung des Luftfederbalgs bzw. generell der Verbindung zwischen Schwinge und Fahrzeugrahmen mittels des Luftfederbalgs erreicht.

Der Luftfederbalg kann rahmenfest oder schwingenfest angeordnet sein.

Gemäß einem unabhängigen Aspekt der Erfindung wird ein Nutzfahrzeug mit einem Luftfederungssystem gemäß der Erfindung bzw. den vorstehend genannten Ausführungsbeispielen beansprucht.

Die Erfindung wird nachfolgend anhand von Ausführungsbeispielen unter Bezug auf die beigefügten schematischen Zeichnungen mit weiteren Einzelheiten erläutert. In diesen zeigen:
- Fig. 1: eine Seitenansicht eines Luftfederungssystems nach einem erfindungsgemä- ßen Ausführungsbeispiel mit einem von der Schwinge trennbaren Luftfe- derbalg;
- Fig. 2: eine Ansicht von unten des Luftfederbalgs der Vorrichtung gemäß Fig. 1;
- Fig. 3: eine Ansicht von unten der Schwinge der Vorrichtung gemäß Fig. 1.

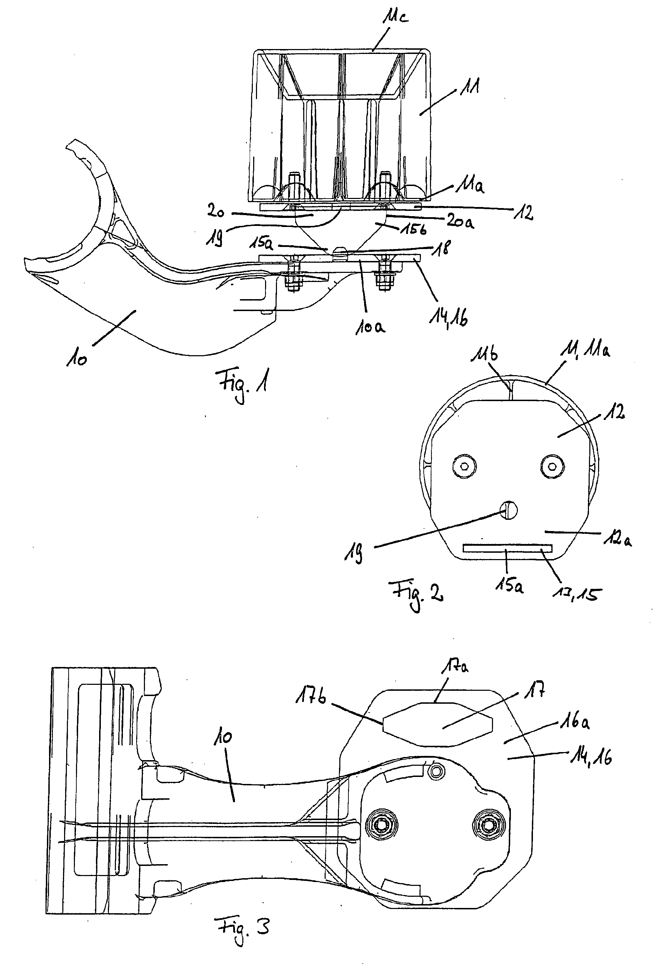

Fig. 1 zeigt ein Beispiel für ein erfindungsgemäßes Luftfederungssystem, das bei Nutzfahrzeugen, insbesondere bei Nutzfahrzeuganhängern bzw. Nutzfahrzeugaufliegern zum Einsatz kommt. Das Luftfederungssystem ist Teil der Achsaufhängung, die im Rahmen der Erfindung offenbart und beansprucht wird. Das Luftfederungssystem wird auch im Zusammenhang mit dem Nutzfahrzeug offenbart und beansprucht.

Wie in Fig. 1 dargestellt, umfasst das Luftfederungssystem eine Schwinge 10, an der eine Radachse (nicht dargestellt) befestigt ist. Die Schwinge 10 ist schwenkbar gelagert, insbesondere an einer Luftfederstütze, die mit dem Fahrzeugrahmen fest verbunden ist. In an sich bekannter Weise ist ein Stoßdämpfer jeweils an der Luftfederstütze und an der Schwinge 10 angelenkt. Das Luftfederungssystem umfasst ferner einen Luftfederbalg 11.

Der Luftfederbalg 11 ist zwischen dem Fahrzeugrahmen (nicht dargestellt) und der Schwinge 10 angeordnet, insbesondere im Bereich des in Fahrtrichtung hinten liegenden Längsendes der Schwinge 10. Die Anordnung aus Schwinge 10, Luftfederbalg 11 und dem Fahrzeugrahmen bildet eine trennbare bzw. lösbare Verbindung. Bei dem Ausführungsbeispiel gemäß Fig. 1 ist der Luftfederbalg 11 rahmenfest angeordnet und lösbar mit der Schwinge 10 verbunden. Es ist auch möglich, die trennbare Verbindung umzukehren und den Luftfederbalg 11 schwingenfest, d.h. fest an der Schwinge anzuordnen und die lösbare Verbindung zwischen dem Luftfederbalg 11 und dem Fahrzeugrahmen vorzusehen. In beiden Fällen kann ein herkömmlicher Luftfederbalg verwendet werden.

Wie in den Figuren 1 und 2 zu erkennen, ist am Luftfederbalg 11 eine Platte 12, insbesondere eine erste Platte 12 angeordnet. Die Platte 12 ist am axialen Ende 11 des Luftfederbalgs 11, insbesondere an dem in der Einbaulage unteren axialen Ende 11a des Luftfederbalgs 11 befestigt. Dabei ist die Platte 12 mit dem Tauchkolben 11b des Luftfederbalgs 11 verbunden, beispielsweise verschraubt. Andere Verbindungsarten sind selbstverständlich möglich. Wie in den Figuren 1, 2 ferner dargestellt, ist die Platte 12 senkrecht zur Längsachse des Luftfederbalgs 11 angeordnet. Das andere axiale Ende 11c, d.h. das in der Einbaulage obere axiale Ende 11c des Luftfederbalgs 11 ist mit dem Rahmen fest verbunden bzw. ist für eine feste Verbindung mit dem Rahmen angepasst.

In Fig. 2 ist dargestellt, dass die erste Platte 12 bereichsweise über den Außenumfang des Luftfederbalgs 11 vorsteht. Die Platte 12 bildet dabei einen vorstehenden Bereich 12a, in dem ein Zentriermittel 13 angeordnet ist bzw. an dessen Unterseite das Zentriermittel 13 befestigt ist. Das Zentriermittel 13 ist bei dem Ausführungsbeispiel gemäß den Figuren 1, 2 als dreieckförmiges Blech 15 ausgebildet, das sich im Wesentlichen senkrecht zur Platte 12 erstreckt. Das dreieckförmige Blech 15 weist eine abgerundete Spitze 15a auf, die ein besonders gutes und sicheres Eintauchen in das nachfolgend beschriebene Gegenstück 14 zum Zwecke der Zentrierung ermöglicht. An der Basis 15b des dreieckförmigen Blechs 15 ist ferner ein Fuß 20 angeordnet, der im Wesentlichen eine rechteckige Form mit einer geringeren Höhe als das dreieckförmige Blech 15 aufweist und das dreieckförmige Blech mit der ersten Platte 12 verbindet. Die seitlichen Kanten 20a des Fußes 20 bilden mit der ersten Platte 12 im Wesentlichen einen rechten Winkel. Die Erfindung ist nicht auf das in den Figuren 1 und 2 dargestellte dreieckförmige Blech 15 eingeschränkt, sondern umfasst andere Zentriermittel 13, insbesondere flache bzw. blechartige oder plattenartige Zentriermittel, die an der Unterseite der Platte 12 angebracht sind.

Durch die Anordnung des Zentriermittels 13 im vorstehenden Bereich 12a der Platte 12 ist das Zentriermittel 13 bezogen auf den Querschnitt des Luftfederbalgs 11 außermittig bzw. exzentrisch angeordnet. Das dreieckförmige Blech 15 bzw. allgemein das Zentriermittel 13 kann dabei außerhalb des Außenumfangs des Luftfederbalgs 11 angeordnet sein.

Der ersten Platte 12 ist ein Gegenstück 14 zugeordnet, das bei dem Beispiel gemäß Fig. 1 ortsfest bezogen auf die Schwinge 10 vorgesehen ist. Das Gegenstück 14 ist dabei als zweite Platte 16 ausgebildet, in der eine Zentrieröffnung 17, insbesondere eine Zentrieröffnung 17 mit einer rautenförmigen Kontur vorgesehen ist. Ebenso wie das dreieckförmige Blech 15 weist auch die Zentrieröffnung 17 gefaste Kanten auf, um das Ineinandergleiten der beiden Elemente zu erleichtern. Die zweite Platte 16 ist mit einer Auflagefläche 10a der Schwinge 10 für den Luftfederbalg 11 verbunden, beispielsweise durch eine Schraubverbindung. Andere Verbindungsarten sind möglich. Wie in Fig. 3 dargestellt, ist die zweite Platte 16 analog zur ersten Platte 12 ausgebildet. Dementsprechend steht die zweite Platte 16 bereichsweise über den Außenumfang der Auflagefläche 10a der Schwinge 10 vor. Die Zentrieröffnung 17 ist im vorstehenden Bereich 16a der zweiten Platte 16 angeordnet bzw. ausgebildet. Die beiden Platten 12, 16 am Luftfederbalg 11 bzw. an der Schwinge 10 sind so ausgerichtet, dass das Zentriermittel 13 bzw. das dreieckförmige Blech 15 in die Zentrieröffnung 17 eingreifen kann, insbesondere in der Fahrstellung. Bei dem Ausführungsbeispiel gemäß den Figuren 1 bis 3 ragen die beiden Platten 12, 16 jeweils seitlich über die Schwinge 10 bzw. den Luftfederbalg 11 vor. Es ist möglich, die beiden Platten an anderen Stellen über die Schwinge 10 bzw. den Luftfederbalg 11 vorstehen zu lassen, beispielsweise in Längsrichtung der Schwinge 10 oder in einer Zwischenstellung zwischen der seitlichen Anordnung der vorstehenden Bereiche 12a, 16a und der axialen Anordnung in Längsrichtung der Schwinge 10.

Die Form der Zentrieröffnung ist besonders gut in Fig. 3 zu erkennen. Dementsprechend weist die Zentrieröffnung 17 eine rautenförmige Kontur auf.

Die Längsachse bzw. längere Achse der rautenförmigen Kontur erstreckt sich im Wesentlichen parallel zur Schwinge 10 und ist koaxial zum dreieckförmigen Blech 15 angeordnet. Die kürzere Querachse der rautenförmigen Kontur ist so angeordnet, dass die Spitze 15a des dreieckförmigen Blechs 15 beim Verbinden der Schwinge 10 mit dem Luftfederbalg 11 im Bereich der kürzeren Querachse in die Zentrieröffnung 17 eintaucht. Dadurch wird eine sichere Einfädelung des dreieckförmigen Blechs 15 in die Zentrieröffnung 17 erreicht. Wie ferner in Fig. 3 zu erkennen, basiert die Zentrieröffnung 17 auf einer Rautenform, wobei die Kanten bzw. Spitzen der Rautenform abgeflacht sind. Insbesondere die Spitze im Bereich der kürzeren Querachse ist durch einen langgestreckten Abschnitt 17a ersetzt, wodurch der Einfädelbereich der Zentrieröffnung 17 für das dreieckförmige Blech 15 vergrößert wird. Die Spitzen der klassischen Rautenform im Bereich der längeren Längsachse sind ebenfalls durch abgeflachte Bereiche 17b ersetzt, die etwas kürzer sind, als die langgestreckten Abschnitte 17a im Bereich der kürzeren Querachse der Zentrieröffnung 17. Die rautenförmige Zentrieröffnung 17 kann auch durch eine elliptische Zentrieröffnung 17 oder durch eine rechteckförmige Zentrieröffnung 17 ersetzt werden.

Zur Erhöhung der Stabilität der Verbindung zwischen dem Luftfederbalg 11 und der Schwinge 10 sind zwischen den beiden Platten 12, 16 wenigstens ein, insbesondere mehrere Bolzen 18 vorgesehen, die in passende Bohrungen 19 im Fahrzustand eingreifen. Die Bolzen 18 können an der am Luftfederbalg 11 vorgesehenen Platte 12 oder an der an der Schwinge 10 vorgesehenen zweiten Platte 16 befestigt sein. In der jeweils anderen Platte sind die entsprechenden Bohrungen 19 für den Eingriff mit dem Bolzen 18 vorgesehen. Im Allgemeinen ist der Bolzen 18 wesentlich kürzer ausgebildet als das dreieckförmige Blech 15 und dient zur Fixierung des Luftfederbalgs 11 mit der Schwinge 10 im Fahrzustand bzw. im verbundenen Zustand. Insbesondere umfasst der Bolzen 18 eine Höhe, die im Wesentlichen der Dicke der Platte 12 an der Unterseite des Luftfederbalgs 11 entspricht. Die Zentrierung des Luftfederbalgs 11 bezüglich der Schwinge 10 erfolgt demnach beim Fügen der Bauteile vorwiegend durch das dreieckförmige Blech 15. Der Bolzen 18 übernimmt im Fahrzustand eine zusätzliche Sicherungsfunktion.

Das Luftfederungssystem gemäß den Figuren 1 bis 3 funktioniert wie folgt:
Bei der Verladung, insbesondere der Bahnverladung wird das Fahrzeug durch einen Kran angehoben und das Fahrwerk entlastet, das dadurch über den normalen Ausfederweg gebracht wird. Der Luftfederbalg, bedingt durch das geschlossene Niveauregulierungsventil bleibt in Position. Demzufolge wird das dreieckförmige Blech 16 bzw. Fixierstück aus der rautenförmigen Zentrieröffnung 17 gezogen und der Luftfederbalg 11 von der Schwinge 10 getrennt.

Beim Absetzen des Fahrzeugs erfolgt in umgekehrter Reihenfolge der Fügevorgang dadurch, dass das dreieckförmige Blech 15 in die rautenförmige Zentrieröffnung 17 der auf der Schwinge 10 angebrachten zweiten Platte 16 eintaucht. Die Schwingbewegungen des Luftbalges 11, die regelmäßig bei dem Absenkvorgang auftreten, werden durch die Dimensionierung der rautenförmigen Zentrierungsöffnung 17 kompensiert, insbesondere durch den verlängerten Querbereich (Abschnitt 17a). Das dreieckförmige Blech 15 gleitet an den Bereichen 17b, die als Berührungspunkte für das Blech 15 dienen, bis zur vollkommenen Zentrierung in die Zentrieröffnung 17. Damit sitzt zugleich die an der Luftbalgunterseite befestigte erste Platte 12 auf der Schwingenoberseite vorgesehenen zweiten Platte 12 mit der rautenförmigen Zentrierungsöffnung 17 auf. Bevor die beiden Platten 12, 16 in Kontakt gelangen, erfolgt ein weiterer Fügevorgang, bei dem ein oder mehrere an der unteren zweiten Platte 16 befestigte, oben konisch ausgebildete Bolzen 18 in komplementäre Bohrungen 19 in der oberen ersten Platte 12 eingreifen. Beim Fügevorgang wirken der Bolzen 18 und der Fuß 20 in etwa gleichzeitig mit der Bohrung 19 bzw. der Zentrieröffnung 17 zusammen. Dabei ist die Breite des Fußes 20 derart angepasst, dass zwischen dem Fuß 20 und der Zentrieröffnung 17 ein geringes Spiel vorhanden ist, so dass der Bolzen 18 und das Blech 15 frei beweglich mit dem jeweiligen Gegenstück in Eingriff kommen, ohne zu verklemmen. Auf diese Weise werden der Luftbalg 11 und die Schwinge 12 sicher fixiert. Das Fahrwerk ist dann wieder fahrbereit.

Im Fahrzustand bilden somit die an der Schwinge 10 angebrachte Platte 16 mit der rautenförmigen Zentrieröffnung 17 und das eingetauchte dreieckförmige Blech 15 bzw. Fixierstück der an der Balgunterseite befestigten ersten Platte 12 eine feste Einheit.

Es ist möglich, dass die beiden Platten 12, 16 jeweils mit einem Bohrbild ausgestattet sind, das die Montage an verschiedene Luftfederungen erlaubt.

Die Erfindung hat insgesamt den Vorteil, dass Standardluftfederbälge praktisch jeden Herstellers verwendet werden können, die problemlos mit der erfindungsgemäßen Vorrichtung nachgerüstet werden. Zusätzliche Teile, wie beispielsweise die zweite Schwinge bzw. Blattfeder gemäß EP 0 742 113 sind nicht erforderlich. Die Fügeteile, d.h. die beiden Platten 12, 16 mit den daran vorgesehenen Zentriermitteln können leicht am Luftfederbalg 11 und an der Schwinge 10 montiert werden.

### Bezugszeichenliste

- 10: Schwinge
- 10a: Auflagefläche
- 11: Luftfederbalg
- 11a: axiales Ende
- 12: Platte
- 12a: vorstehender Bereich
- 13: Zentriermittel
- 14: Gegenstück
- 15: Blech
- 15a: abgerundete Spitze
- 15b: Basis
- 16: zweite Platte
- 16a: vorstehender Bereich
- 17: Zentrieröffnung
- 17a: langgestreckter Abschnitt
- 17b: abgeflachter Bereich
- 18: Bolzen
- 19: Bohrung
- 20: Fuß
- 20a: seitliche Kante

## Patentansprüche

1. Luftfederungssystem für ein Nutzfahrzeug mit einer schwenkbar gelagerten Schwinge (10) zur Befestigung einer Radachse und einem Luftfederbalg (11) zur lösbaren Verbindung der Schwinge (10) mit einem Fahrzeugrahmen, wobei die Schwinge (10) in eine Lösestellung nach unten und in eine Fahrstellung nach oben schwenkbar ist,
**dadurch gekennzeichnet, dass**
eine erste Platte (12) am Luftfederbalg (11), insbesondere an einem axialen Ende (11a) des Luftfederbalgs (11) senkrecht zur Längsachse des Luftfederbalgs (11) angeordnet ist, die bereichsweise über den Außenumfang des Luftfederbalgs (11) vorsteht, wobei ein Zentriermittel (13) im vorstehenden Bereich (12a) der Platte (12) angeordnet ist, das mit einem bezogen auf die Schwinge (10) oder den Rahmen ortsfesten Gegenstück (14) zumindest in der Fahrstellung der Schwinge (10) im Eingriff ist.

2. Luftfederungssystem nach Anspruch 1,
**dadurch gekennzeichnet, dass**
das Zentriermittel (13) ein dreieckförmiges Blech (15) umfasst, das auf der dem Gegenstück (14) zugewandten Seite der ersten Platte (12) im Wesentlichen parallel zur Längsachse des Luftfederbalgs (11) angeordnet ist.

3. Luftfederungssystem nach Anspruch 1 oder 2,
**dadurch gekennzeichnet, dass**
das Gegenstück (14) eine zweite Platte (16) umfasst, in der eine Zentrieröffnung (17) mit einer rautenförmigen Kontur ausgebildet ist.

4. Luftfederungssystem nach wenigstens einem der Ansprüche 1 bis 3,
**dadurch gekennzeichnet, dass**
das Gegenstück (14), insbesondere die zweite Platte (16) mit einer Auflagefläche (10a) der Schwinge (10) für den Luftfederbalg (11) verbunden ist.

5. Luftfederungssystem nach wenigstens einem der Ansprüche 1 bis 4,
**dadurch gekennzeichnet,dass**
die zweite Platte (16) bereichsweise über den Außenumfang der Auflagefläche (10a) vorsteht, wobei die Zentrieröffnung (17) im vorstehenden Bereich (16a) der zweiten Platte (16) angeordnet ist.

6. Luftfederungssystem nach wenigstens einem der Ansprüche 1 bis 5,
**dadurch gekennzeichnet, dass**
die erste Platte (12) und/oder das Gegenstück (14), insbesondere die zweite Platte (16) mit wenigstens einem Bolzen (18) verbunden ist, der im Fahrzustand der Schwinge (10) in eine entsprechende Bohrung (19) in dem Gegenstück (14), insbesondere der zweiten Platte (16) und/oder der ersten Platte (12) eingreift.

7. Luftfederungssystem nach wenigstens einem der Ansprüche 1 bis 6,
**dadurch gekennzeichnet, dass**
der Luftfederbalg (11) rahmenfest oder schwingenfest angeordnet ist.

8. Nutzfahrzeug mit einem Luftfederungssystem nach einem der Ansprüche 1 bis 7.

## Claims

1. Air suspension system for a utility vehicle, having a pivotably mounted rocker (10) for attachment of a wheel axle, and having an air suspension bellows (11) for releasable connection of the rocker (10) to a vehicle frame, the rocker (10) being pivotable downwards into a released position and upwards into a driving position,
**characterised in that**
a first plate (12) is arranged at the air suspension bellows (11), especially at an axial end (11 a) of the air suspension bellows (11), perpendicular to the longitudinal axis of the air suspension bellows (11), which first plate (12) projects in part beyond the outer periphery of the air suspension bellows (11), there being arranged in the projecting part (12a) of the plate (12) a centring means (13) which is in engagement, at least when the rocker (10) is in the driving position, with a counterpart (14) which is in a fixed position relative to the rocker (10) or to the frame.

2. Air suspension system according to claim 1,
**characterised in that**
the centring means (13) comprises a triangular metal sheet (15) arranged on that side of the first plate (12) which faces the counterpart (14), substantially parallel to the longitudinal axis of the air suspension bellows (11).

3. Air suspension system according to claim 1 or 2,
**characterised in that**
the counterpart (14) comprises a second plate (16) in which there is formed a centring aperture (17) having a lozenge-shaped outline.

4. Air suspension system according to at least one of claims 1 to 3,
**characterised in that**
the counterpart (14), especially the second plate (16), is connected to a supporting surface (10a) of the rocker (10) for the air suspension bellows (11).

5. Air suspension system according to at least one of claims 1 to 4,
**characterised in that**
the second plate (16) projects in part beyond the outer periphery of the supporting surface (10a), the centring aperture (17) being arranged in the projecting part (16a) of the second plate (16).

6. Air suspension system according to at least one of claims 1 to 5,
**characterised in that**
the first plate (12) and/or the counterpart (14), especially the second plate (16), is connected to at least one bolt (18) which, when the rocker (10) is in the driving condition, engages in a corresponding hole (19) in the counterpart (14), especially the second plate (16), and/or the first plate (12).

7. Air suspension system according to at least one of claims 1 to 6,
**characterised in that**
the air suspension bellows (11) is arranged fixedly connected to the frame or fixedly connected to the rocker.

8. Utility vehicle having an air suspension system according to one of claims 1 to 7.

## Revendications

1. Système de suspension pneumatique pour un véhicule utilitaire comprenant une coulisse (10) logée de manière à pouvoir pivoter servant à fixer un essieu de roue et un soufflet pneumatique (11) servant à assembler de manière amovible la coulisse (10) à un châssis de véhicule, sachant que la coulisse (10) peut pivoter vers le bas dans une position de libération et vers le haut dans une position de marche,
**caractérisé en ce**
**qu'**une première plaque (12) est disposée au niveau du soufflet pneumatique (11), en particulier au niveau d'une extrémité (11a) axiale du soufflet pneumatique (11) de manière perpendiculaire par rapport à l'axe longitudinal du soufflet pneumatique (11), laquelle fait saillie par endroits de la périphérie extérieure du soufflet pneumatique (11), sachant qu'un moyen de centrage (13) est disposé dans la zone faisant saillie (12a) de la plaque (12), laquelle zone est en prise au moins dans la position de marche de la coulisse (10), avec une pièce complémentaire (14) immobile par rapport à la coulisse (10) ou au châssis.

2. Système de suspension pneumatique selon la revendication 1,
**caractérisé en ce**
**que** le moyen de centrage (13) comprend une tôle (15) triangulaire, qui est disposée sur le côté, tourné vers la pièce complémentaire (14), de la première plaque (12), essentiellement de manière parallèle par rapport à l'axe longitudinal du soufflet pneumatique (11).

3. Système de suspension pneumatique selon la revendication 1 ou 2,
**caractérisé en ce**
**que** la pièce complémentaire (14) comprend une deuxième plaque (16), dans laquelle est réalisé un orifice de centrage (17) doté d'un contour rhombiforme.

4. Système de suspension selon au moins l'une quelconque des revendications 1 à 3,
**caractérisé en ce**
**que** la pièce complémentaire (14), en particulier la deuxième plaque (16) est reliée à une surface d'appui (10a) de la coulisse (10) pour le soufflet pneumatique (11).

5. Système de suspension pneumatique selon au moins l'une quelconque des revendications 1 à 4,
**caractérisé en ce**
**que** la deuxième plaque (16) fait saillie par endroits de la périphérie extérieure de la surface d'appui (10a), sachant que l'orifice de centrage (17) est disposé dans la zone (16a) faisant saillie de la deuxième plaque (16).

6. Système de suspension pneumatique selon au moins l'une quelconque des revendications 1 à 5,
**caractérisé en ce**
**que** la première plaque (12) et/ou la pièce complémentaire (14), en particulier la deuxième plaque (16), sont reliées à au moins un boulon (18), qui, lorsque la coulisse (10) se trouve dans un état de marche, vient en prise avec un alésage (19) correspondant dans la pièce complémentaire (14), en particulier dans la deuxième plaque (16), et/ou dans la première plaque (12).

7. Système de suspension pneumatique selon au moins l'une quelconque des revendications 1 à 6,
**caractérisé en ce**
**que** le soufflet pneumatique (11) est disposé de manière solidaire au châssis ou de manière solidaire à la coulisse.

8. Véhicule utilitaire comprenant un système de suspension pneumatique selon l'une quelconque des revendications 1 à 7.
